# EUROPEAN PATENT APPLICATION

(11) **EP 1 212 950 A1**
(43) Date of publication of application: **12.06.2002**
(21) Application number: 01128972.5
(22) Date of filing: 06.12.2001
(51) Int. Cl.: A23N 15/00

(54) **Feeding device for an automatic machine to obtain artichokes hearts or bottoms**

(30) Priority: 06.12.2000 IT VR000118
(71) Applicant: MECCANOFRUTTA ITALIANA SRL, 37023 Grezzana (VR) (IT)
(72) Inventor: Tomelleri, Tiziana, 37023 Grezzana (VR) (IT)
(74) Representative: Petraz, Gilberto Luigi

(57) **Abstract**

An automatic device (10) for feeding artichokes (13) onto a machine to obtain artichoke hearts comprises:
- a fixed framework (11);
- a device (12) for feeding unprocessed artichokes (13);
- a device (14) for displacing the artichokes (13) in a laid state and transferring them to following working phases;
- a station (15) for orienting said artichokes (13);
- a device (17) for straightening the artichokes (13) and thereafter inserting them inside said machine to obtain artichoke hearts or bottoms.

## Description

### TECHNICAL FIELD

The present invention relates to a device for feeding an automatic machine to obtain artichoke hearts or bottoms.

More particularly, the present invention refers to a feeding device suitable to be inserted in an automated process for the obtainment of the central portions of artichokes, separating them from parts considered as discard.

The device comprises a structure suitable to make the whole working process completely automated.

### BACKGROUND ART

Procedures and improvements for the obtainment of artichoke hearts are known in the art; a method for carrying out such procedures supported by devices dedicated to the processing of these vegetables is also known.

A procedure and a corresponding device are described in detail in italian patent No. 1.117.844 according to which some whole artichokes are conveyed towards a sequence of different working stations according to the steps described as follows:
- positioning and clamping a batch of artichokes;
- cutting at a predetermined height of each artichoke stem of said batch;
- placing and seting up the batch in proximity of a turning and milling station;
- turning the bottom or stalk and simultaneous removal of the external leaves of each artichoke of the batch;
- discharging the obtained artichoke hearts, which are still provided of a part of the partially cut initial stem;
- manually withdrawing said hearts and setting them up onto a feeding device suitable for the finishing of the products.

The above described device realizes the whole processing cycle with several automated steps and obtains fast production times.

Improvements have been already proposed concerning both the feeding of the device and the orientation of the artichokes before the phase of stem cutting, see as reference italian patent No. 1.274.223 according to which an intermittently driven tilted conveyor moves a batch of artichokes toward respective small cups; a counterrotating brush, in respect of the advancing movement of said conveyor, allows only a vegetable at a time to pass, addressing it to a respective small cup.

The small cups are bound to and dragged from a horizontal conveyor, which is intermittently moved and synchronized in relation to the tilted conveyor, said horizontal conveyor being suitable to move them toward an orientating station.

The latter comprises a plate, suitable for supporting a cinematic system for the rotation of orientating arms, movable from a rest position distal from the horizontal conveyor up to a working position next to the same.

Each orientating arm includes a longitudinal end, that in use is adjacent to a respective artichoke, having a fork or tine configuration and that is moved by a mechanism constituted by a rack engaging on a respective toothed wheel.

A drawback is represented by the fact that the devices according to the prior art are not able to guarantee the obtainment of a product without needing any manual intervention from an external operator.

Another drawback is represented by the fact that also the slightest manual interventions are performed outside the device requiring, as a consequence, much stronger hygienic rules if compared to completely automated working process.

### DESCRIPTION OF THE INVENTION

The present invention aims to provide a feeding device suitable to load artichokes onto an automatic machine to obtain artichokes bottoms or hearts with or without a stem, suitable to avoid any manual intervention from external operators.

This is achieved by means of a device for feeding an automatic machine to obtain artichoke bottoms or hearts, having the features disclosed in the main claim.

Dependent claims outline particularly advantageous forms of embodiment of the invention.

The device according to the invention comprises a fixed supporting framework for:
- a device for feeding unprocessed artichokes;
- a device for displacing the artichokes in a laid state and transferring them to following working phases;
- a station for orienting the artichokes;
- a station for cutting the stems of the artichokes, where present;
- a device suitable for catching the pre-worked artichokes and for inserting them into a feeding station of a tool machine for turning the artichokes and removing the leaves.

According to an advantageous form of embodiment of the invention, the device for straightening the pre-worked artichokes comprises the following details:
- a crossbar fixed to the framework of the device and substantially parallel to the feeding direction of the artichokes dragged by the driving device, suitable for supporting a sliding block which can mounted onto said crossbar;
- a group for driving said block;
- telescopic uprights, each one including a longitudinal end that is hinged to said block, whereby the opposed end is fixed to a bar, that is substantially parallel to the crossbar, substantially parallel to the crossbar and movable in the direction of approaching to and moving away from the driving device, suitable for supporting means for catching the artichokes positioned on said driving device;
- a profiled section connected to the telescopic uprights,
- a group for driving said profiled section;
- a group for driving the bar and a further driving group for obtaining the oscillation of said telescopic uprights relative to the block;
- position sensors, for each of said driving groups and/or devices, electrically connected to a suitable electronics.

The unprocessed artichokes are preferably supplied to the driving group by means of a feeding device constituted by a hopper provided of movable sectors, each one comprising cavities suitable for receiving a respective vegetable.

The number of cavities for each sector is predefined and indicates the amount of artichokes defining a batch which will proceed with the same advancemente pitch for the following working procedures.

Each sector can be moved starting from a feeding entrance, corresponding to the lower part of the automatic machine, up to the exit from the hopper placed at a certain height.

Furthermore each sector is staggered in the height in respect of the next one in such a way as to define a progression of steps suitable for dragging the unprocessed artichokes to the exit of the hopper, simultaneously obtaining their proper arrangement.

When falling from the hopper, the unprocessed artichokes are placed onto respective small cups fixed to a conveyor, that defines the driving device for moving the vegetables to the orientating station.

At this point the artichoke stems are straightened, in such a way as they project from the same side and they are aligned to each other, whereas they are suitable to be moved, always by means of the conveyor, to the cutting station.

The latter, that comprises means for temporarily clamping the artichokes, immobilizes the unprocessed artichokes and partially cuts their stem at a defined height.

At the exit from the cutting station, the pre-worked artichokes, always moved by means of the conveyor, are immediately positioned beneath the straightening device which, by means of catching means, collects the vegetables and, by means of a further translation movement of the bar and rotation of the same, discharges them perfectly aligned to each other inside the tool machine for turning them and removing their leaves.

At the end of this operation the end products are collected by any suitable discharging device and set for possible further cleaning and packaging operations.

### ILLUSTRATION OF DRAWINGS

Other features and advantages of the invention will become apparent by reading the following description of a form of embodiment of the invention, given as a nonlimiting example and with the help of the figures illustrated in the annexed drawing, in which:

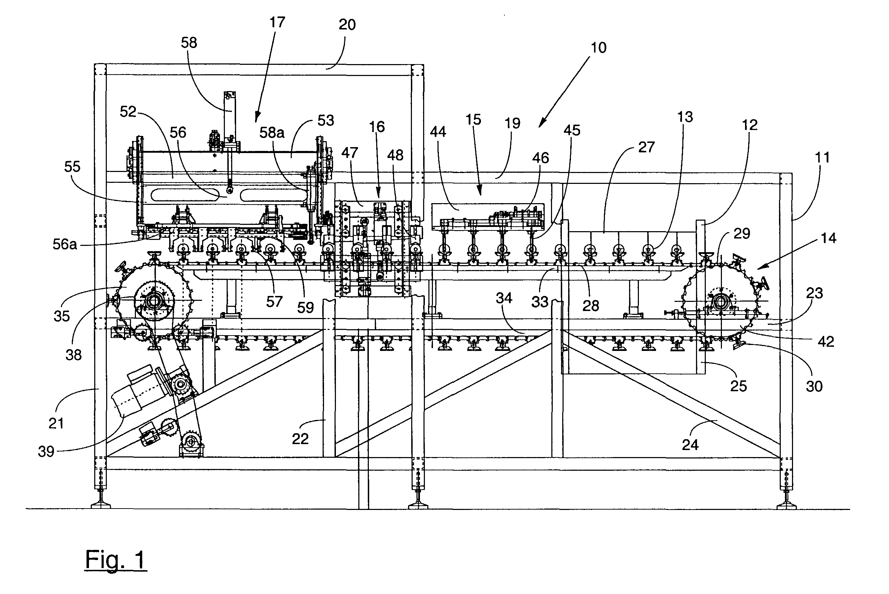

- fig. 1 shows a side view, slightly from above, of an automatic machine according to the invention; and
- fig. 2 shows a front view, slightly from above, of figure 1.

### DESCRIPTION OF A FORM OF EMBODIMENT

In the figures, reference sign 10 generally indicates a device for feeding an automatic machine to obtain artichoke hearts or bottoms.

The device 10 comprises a fixed framework 11 that supports:
- a device 12 for feeding unprocessed artichokes 13 provided of stem;
- a device 14 for driving the artichokes 13 and transferring them to following phases of the working process;
- a station 15 for orienting the artichokes 13;
- a station 16 for cutting the stems of the artichokes 13;
- a device 17 for straightening the pre-worked artichokes 13;
- a tool machine 18 (see fig. 3) for turning the artichokes and removing their leaves;
- a device (not shown in the drawings) for discharging the finished worked products.
- an electronic control system (not shown in the drawings) suitable for controlling and governing the operation of the automatic machine 10.

The fixed framework 11 comprises a primary sector 19 and a secondary sector 20, of which the primary sector 19 is used to support and contain the feeding device 12 and the orienting station 15, while the secondary sector 20 is assigned to support and contain the cutting station 16, the device 17 for straightening the artichokes, the tool machine 18 and the discharging device.

The driving group 14 is supported and contained by both sectors 19 and 20, and it covers the entire length of machine 10 in order to assure the transportation of the products through the different working steps.

Each sector 19 and 20 is constituted by a reticular frame, with relatively large meshes, comprising a plurality of supporting uprights 21, some connecting uprights 22 and some crossbars 23 running along the whole longitudinal extension of the framework 11 and connecting the different uprights 21 and 22 to each other.

In order to reinforce the entire framework 11, the uprights 21 and 22, in correspondence of the lower part of the machine 10, are further connected to each other by means of transversal bars 24 which are fixed to them.

The feeding device 12 can be constituted by a hopper 25 provided of movable sectors (not shown in the drawings), each one comprising cavities suitable for receiving a respective vegetable 13.

The number of cavities for each sector is predefined and indicates the amount of artichokes 13 defining a batch which will proceed at the same advancement pitch during the following working procedures.

Each sector is driven starting from a feeding entrance, corresponding to the lower part of the automatic device 10, up to the exit 27 from the hopper 25 placed at a certain height.

Furthermore each sector is staggered in the height in respect of the next one in such a way as to define a progression of steps, that can be defined as "pilgrim step", suitable for dragging the unprocessed artichokes 13 towards the exit 27 of the hopper obtaining at same time their proper arrangement.

The exit 27 of the hopper 25 is located just over the driving device 14 in such a way that the artichokes 13 can be discharged thereupon and then driven away.

The driving group 14 comprises a chain 28 made of links 29 hinged to each other and supporting an unbroken sequence of small cups 30 suitable for receiving and transporting the artichokes 13.

The chains 28 are kept in position by some upper 33 and lower 34 guides steadily fixed to the framework 11 of the automatic machine 10.

The chains 28 are engaged to a driving wheel 35 fixed to a respectibe shaft supported by a bearing which, on its turn, is fixed to the framework 11 inside the secondary sector 20.

On the same shaft is fixed a driven toothed wheel 38 cinematically connected to any suitable motion source, for example an electric motor 39 fixed to the lower part of the framework 11 always inside the secondary sector 20.

The cinematical connection of the driven toothed wheel 38 can be obtained by means of a chain that is driven and supported by idle toothed pulleys.

Furthermore the lateral chains 32 are engaged onto an idle wheel 42, that is hinged to the framework 11 inside the primary sector 19 on a longitudinally opposed side in respect of the position of the driving wheel 35.

The arrangement of the driving wheel 35 and of the idle one 42 is such as that the driving group 14 covers almost the entire length of the automatic machine 10.

Moreover, such arrangement allows the small cups 30 to hold a correct horizontal disposition, in order to achieve a more reliable transportation of the artichokes 13 through different phases of the working process.

The idle wheel 42 can comprise a tensioning device suitable for keeping the chains 28 at a proper tension.

Fixed to the framework 11 of the automatic machine 10 inside the primary sector 19, just below the feeding device 12, the orienting station 15 comprises a head 44, which some rotating shaped arms 45 jutting in use from the same head are connected to, said arms being assigned to get in touch with the respective unprocessed artichokes 13 positioned on the small cups 30.

According to a well known technique (see italian patent No. 1.274.223), the shaped arms 30, cinematically connected to a motion source 46 housed within the head 44, get in touch with the stem of a respective artichoke 13, thereby orienting it according to a predefine way and direction.

According to this form of embodiment of the invention, fixed to the framework 11 of automatic machine 10 inside the secondary sector 20, just downstream of the orientating station 15, a cutting station 16 comprises a block 47 suitable for supporting a sequence of linear actuators 48 aligned to the underlying chain 28 and standing above the relative small cups 30 carrying a previously oriented artichoke 13.

Each linear actuator 48 comprises a stem which jutting end is provided of a shaped punch suitable for temporarily clamping a respective artichoke 13.

In correspondence of each shaped punch, a movable counter-punch on the opposed side with reference to the chain 28, clamps the respective artichoke 13, which stem is cut by shears (not shown in the drawings) which are slidably mounted in specific guides integral to the block 47.

Obviously, in the case where the device should be designed for feeding artichokes having previously shortened or removed stems, the cutting station 16 can be omitted.

A device 17 for straightening the pre-worked artichokes 13 is fixed to the upper portion of the framework 11, inside the secondary sector 20 and just downstream of the cutting station. Device 17 comprises:
- a crossbar 52, fixed to the framework 11, substantially parallel to the feeding direction of the conveyor 28, said crossbar supporting a sliding block 53;
- a group 54 (fig. 3) for driving said block 53;
- a plurality of telescopic uprights 55, each one comprising a longitudinal end, hinged to the block 53 while the opposed end is connected to a bar 56a, substantially parallel to the crossbar 52, and movable in a direction moving away from and approaching to the chain 28, said bar 56a being suitable for supporting catching means 57 for the artichokes 13 positioned on the pairs of small cups 30;
- a profiled section 56 connected to the telescopic uprights 55,
- a group 58 for driving said profiled section 56;
- a group 58a for displacing bar 56a and a further driving group 59 for obtaining the oscillation of said telescopic uprights 55 in respect of the block 53;
- position sensors (not shown in the drawings), for each of said driving groups 54, 58, 58a, 59, electrically connected to a suitable electronic control system.

The catching means 57 of the pre-worked artichokes 13 can be constituted by pairs of jaws slidingly inserted onto respective stems which are fixed to the bar 56a, and cinematically connected to any suitable source of motion.

The driving groups 54, 58 and 58a, can be constituted by linear pneumatic actuators, the free ends of their stems being respectively connected to the block 53, to the section 56 and to the bar 56a.

Inside of the secondary sector 20 there is a tool machine 18 for turning the artichokes and removing their external leaves that extends vertically and is located aside of driving device 14 (figure 3), close and underlying to the device 17 for straightening the artichokes.

The tool machine 18 comprises an outer casing 62 having an upper opening 63 suitable for the insertion of the pre-worked artichokes 13 as coming from the device 17 for straightening them.

Such tool machine is *per se* known in the art and it is for example constituted by a machine as the one described and shown in italian patent No. 1117844.

Loading of the artichokes 13 onto the tool machine 18 by means of the automatic device 10 is carried out in accordance to the following procedure.

Batches of artichokes 13, each one comprising for example four vegetables 13, are discharged from the exit 27 of the hopper 25 onto respective small cups 30.

The operation of the chain 28, receiving the motion from the driving wheel 35, is intermittent so that an entire batch is temporarily kept standstill until the actual working phase is terminated and then it is transferred to the following working phase.

When the unprocessed artichokes 13 reach the straightening station 15, the movement of the shaped arms 45 assures their correct positioning for the following stem cut that is carried out inside the cutting station 16, where present.

At the exit of the latter each pre-worked artichoke 13 still comprises a part of its stem and needs to be correctly positioned in a vertical direction in order to be inserted inside of tool machine 18.

The straightening device 17 lowers the profiled section shape 56 towards conveyor 28 by means of actuator 58, and approaches bar 56a towards the same conveyor 28 by means of actuator 58a.

When the catching means 57 are positioned in correspondence of the artichokes 13, each pre-worked vegetable 13 of the batch is caught by means of a couple of jaws.

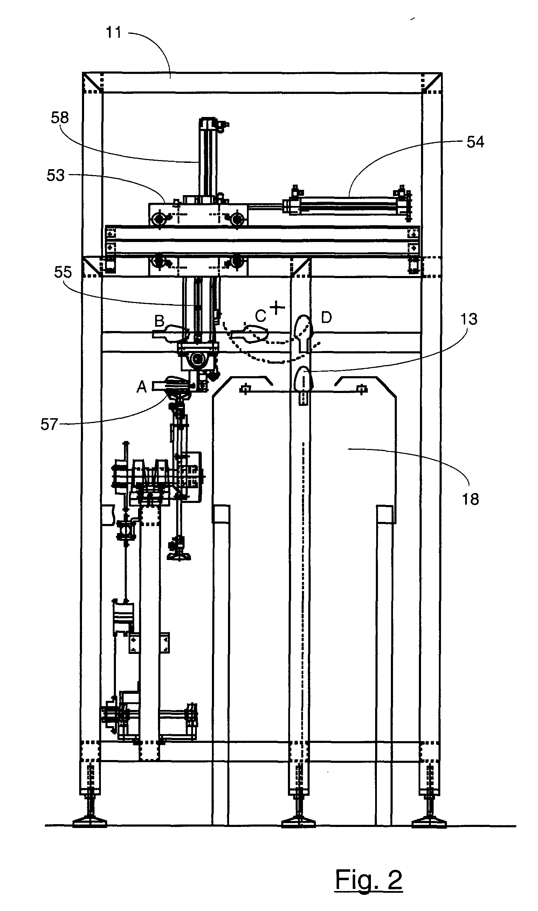

Afterwards the actuator 58a withdraws bar 56a raising the artichokes 13 of the batch from a starting position named "A" (figure 2) up to a position named "B". At this point the actuator 54 is activated, dragging the block 53 and afterwards the entire batch 13 from the previous position "B" up to a position named "C" above the tool machine 18.

Finally the driving group 59 is activated performing the rotation of the batch of the artichokes 13 from the previous position "C" up to a position named "D" and corresponding to the opening 63 of the tool machine 18.

Finally the jaws release their grasp allowing the artichokes 13 to be inserted inside the tool machine 18.

To avoid the risk that some vegetables 13 remain hooked to the catching means 57 also when the jaws release their grasp, the straightening device can be provided of a pushing element (not shown in the drawings) suitable for pushing the pre-worked artichoke 13 from the position "D" towards the inner part of the tool machine 18.

Such pushing element can be of a pneumatic type.

It can be noticed that an automatic device 10 for feeding a machine to obtain artichoke hearts 13 provided of a stem, according to the invention, achieves the intended aims. In particular it does not need any manpower from the moment when a raw vegetable 13 enters the device until an artichoke 13 ready for the packaging is finally discharged.

## Claims

1. Automatic device (10) for feeding artichokes (13) onto a machine to obtain artichoke hearts, **characterized in that** it comprises:
- a fixed framework (11);
- a device (12) for feeding unprocessed artichokes (13);
- a device (14) for displacing the artichokes (13) in a laid state and transferring them to following working phases;
- a station (15) for orienting said artichokes (13);
- a device (17) for straightening the artichokes (13) and thereafter inserting them inside said machine to obtain artichoke hearts or bottoms.

2. Device (10) according to claim 1, **characterized in that** said straightening device (17) of said artichokes (13) comprises catching means (57) for said artichokes (13), as well as a group (58) for driving said catching means between a first position (A) where an artichoke is withdrawn and a second position (D) where the artichoke is inserted into the machine to obtain artichokes hearts or bottoms.

3. Device (10) according to claim 2, **characterized in that** said catching means (57) are contituted by pairs of jaws slidingly mounted on respective stems, and cinematically connected to any suitable source of motion.

4. Device (10) according to anyone of claims 2 and 3, **characterized in that** said straightening device (17) comprises, in correspondence of said catching means (57), a pushing element suitable for forcibly expelling said artichokes (13).

5. Device (10) according to claim 2, **characterized in that** said driving group (58) comprises linear pneumatic actuators.

6. Device (10) according to anyone of the preceding claims, **characterized in that** it comprises position sensors, which are placed on each said device and station, electrically connected a suitable electronics.
